# FASCICULE DE BREVET EUROPEEN

(11) **EP 3 869 686 B1**
(45) Date de publication et mention de la délivrance du brevet: **05.07.2023**
(21) Numéro de dépôt: 21156555.1
(22) Date de dépôt: 11.02.2021
(51) Int. Cl.: F24S 20/70, H02S 20/00, H02S 30/10, H02S 40/22, F24S 25/16, F24S 25/636, F24S 25/65, F24S 23/70, H02S 20/24, H02S 30/00

(54) **SUPPORT POUR PANNEAUX PHOTOVOLTAÏQUES BIFACIAUX**
HALTERUNG FÜR ZWEISEITIGE FOTOVOLTAIK-PANEELE
SUPPORT FOR TWO-SIDED PHOTOVOLTAIC PANELS

(30) Priorité: 21.02.2020 CH 2012020
(43) Date de publication de la demande: 25.08.2021
(73) Titulaire: Suncell Energy SA, 1820 Montreux (CH)
(72) Inventeur: LUGT, Nico, 1814 La Tour-de-Peilz (CH)
(74) Mandataire: P&TS SA (AG, Ltd.)

(56) Documents cités:
- WO-A1-2019/160048
- WO-A2-2012/031286
- JP-A- 2019 024 302
- KR-A- 20090 046 232
- KR-B1- 101 056 531

## Description

### Domaine technique

La présente invention concerne un dispositif d'installation et de fixation de panneaux photovoltaïques. Les dispositifs pour l'installation et la fixation de modules photovoltaïques sont connus dans l'état de la technologie, voir par exemple WO 2019/160048 A1, KR 2009 0046232 A et JP 2019 024302 A. En particulier, le dispositif objet de la présente invention est un support modulaire et peut être disposé sur des surfaces planes et horizontales telles que les toitures d'immeubles. Il est particulièrement adapté à l'installation de panneaux photovoltaïques bifaciaux. A cet effet le dispositif d'installation permet de combiner la fixation des panneaux photovoltaïques avec une inclinaison adéquate, et la fixation de plaques réfléchissantes. Les panneaux photovoltaïques bifaciaux, disposés en partie haute du dispositif, bénéficient d'une irradiation lumineuse supplémentaire indirecte grâce aux plaques réfléchissantes disposées en partie basse du dispositif d'installation. Un tel dispositif d'installation est particulièrement indiqué pour l'installation de panneaux photovoltaïques non cadrés.

### Etat de la technique

Les panneaux photovoltaïques représentent une source d'énergie renouvelable en constante progression. Ils trouvent notamment leur utilité dans les zones citadines pour compléter les apports électriques traditionnels et subvenir partiellement ou totalement à la consommation électrique.

L'espace disponible dans les zones urbaines reste limité et nécessite d'exploiter les surfaces non directement utilisées par les habitants, telles que les toitures des bâtiments. Les toits plats des immeubles sont notamment un emplacement privilégié pour implanter des panneaux photovoltaïques. Cependant, les contraintes relatives à l'étanchéité des toitures et à la charge utile que les toitures sont en mesure de supporter, limitent les possibilités d'installation de tels panneaux photovoltaïques.

Des panneaux photovoltaïques bifaciaux, capables de convertir la lumière sur leurs deux faces, permettent d'augmenter les rendements de production d'électricité pour une surface d'installation donnée. De tels panneaux photovoltaïques doivent cependant être orientés convenablement de sorte à recevoir un maximum de lumière sur leurs deux faces pour que la production d'énergie reste optimale. Il peut être nécessaire de prévoir, en plus des panneaux photovoltaïques, des surfaces réfléchissantes, car la surface du toit sur lequel sont installés les panneaux photovoltaïques, généralement non prévue à cet effet, absorbe le plus souvent trop de lumière.

Les toitures ne peuvent être modifiées facilement, du fait des contraintes techniques et parfois administratives. Il est donc nécessaire de développer des méthodes d'installation de ces panneaux photovoltaïques qui nécessitent peu ou aucune modification ou altération de la surface sur laquelle ils sont installés. Il apparaît en outre nécessaire de rendre l'installation la plus aisée possible. En outre, les coûts de production doivent être limités autant que possible. Des coûts de production et d'installation dissuadent souvent les investissements dans les moyens de production d'énergie basés sur les panneaux photovoltaïques.

La fixation des panneaux photovoltaïques, et en particulier les panneaux photovoltaïques bifaciaux, nécessite en outre de laisser un maximum de leur surface exposée aux irradiations lumineuses. De tels panneaux photovoltaïques sont souvent dépourvus de cadres et par conséquent fragiles. Les points de fixations, portant le plus souvent sur des surfaces réduites et impliquant des forces de serrage, contribuent à une dégradation locale de ces panneaux photovoltaïques et parfois à des défaillances prématurées. La fixation des panneaux photovoltaïques implique en l'occurrence des mâchoires pinçant ponctuellement les bords des panneaux photovoltaïque. Du fait de leur surface exposée et de leur inclinaison, leur prise au vent importante peut être à l'origine de fortes sollicitations au niveau de ces points d'attache, par la pression exercée par la neige par exemple, ou par les effets de succion ou de traction du vent. Il apparaît donc nécessaire d'améliorer la fixation des panneaux photovoltaïques bifaciaux, et en particuliers les panneaux sans cadre, de sorte à préserver leur intégrité dans le temps, tout en maintenant leur performance.

### Bref résumé de l'invention

Un but de la présente invention est de proposer un dispositif d'installation de panneaux photovoltaïques simple et adapté à toute surface horizontale, et en particulier aux toitures plates des immeubles.

Un autre but de l'invention est de proposer un dispositif permettant l'installation de panneaux photovoltaïques bifaciaux de sorte à ce que leur rendement soit optimal.

Un autre but de l'invention est de proposer un dispositif d'installation de panneaux photovoltaïques permettant de préserver dans le temps leur intégrité et leur rendement.

Un autre but de la présente invention est de proposer un dispositif d'installation facile à produire, à transporter et à installer.

Selon l'invention, ces buts sont atteints notamment au moyen du dispositif d'installation revendiqué dans la revendication 1 et détaillé dans les revendications dépendantes.

Cette solution présente notamment l'avantage par rapport aux dispositifs existants d'être adaptée à l'installation de panneaux photovoltaïques bifaciaux et de préserver leurs performance dans la durée. La présente solution est en particulier adaptée aux panneaux bifaciaux non cadrés.

### Brève description des figures

Des exemples de mise en oeuvre de l'invention sont indiqués dans la description illustrée par les figures suivantes :
- • Figure 1:: Vue schématique d'une installation de panneaux photovoltaïques basée sur le dispositif objet de la présente invention.

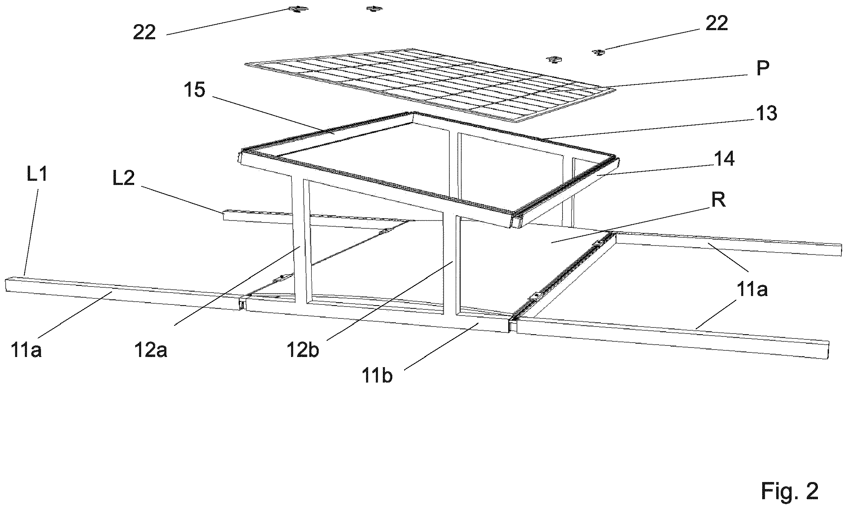

- • Figure 2 :: Vue éclatée d'une partie du dispositif objet de l'invention selon un mode de réalisation.
- • Figure 3 :: Vue éclatée d'une partie du dispositif objet de l'invention en l'absence de panneau photovoltaïque.
- • Figure 4:: Détails des éléments de jonction des longerons constituant le dispositif selon la présente invention.
- • Figure 5 :: Vue en coupe transversale d'un longeron constitutif du dispositif selon la présente invention.
- • Figure 6 :: Vue en coupe transversale d'un longeron constitutif du dispositif selon un mode de réalisation de la présente invention.

### Exemple(s) de mode de réalisation de l'invention

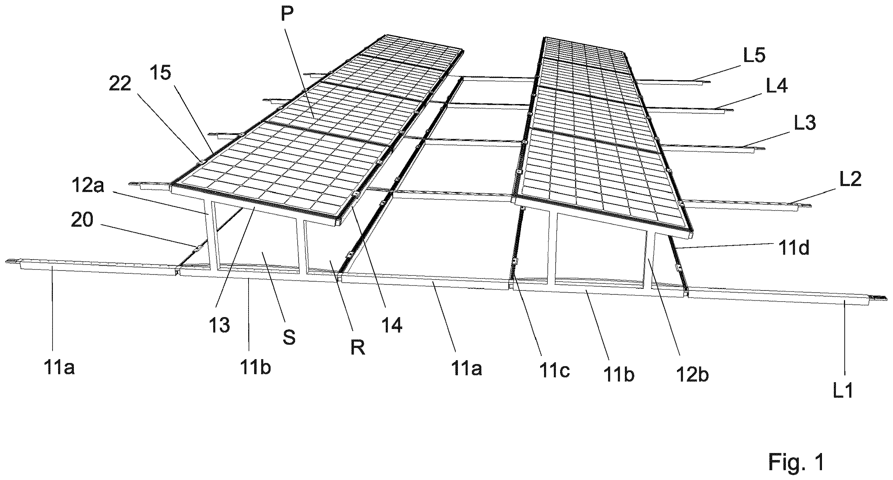

Le dispositif **1** d'installation de panneaux photovoltaïques P selon l'invention est schématisé à la figure 1. Il comporte un ensemble de longerons de base **11a, 11b, 11c, 11d,** servant de socle, un ensemble de piliers **12a, 12b,** supportant un ensemble de longerons d'encadrement **13, 14** et **15,** lesquels permettent de fixer les panneaux photovoltaïques P. Les longerons de base **11a, 11b, 11c, 11d,** sont disposés à l'horizontale, sur une surface plane telle qu'un toit d'immeuble T.

Les longerons de base **11a, 11b, 11c, 11d,** disposés dans un même plan horizontal forment un encadrement permettant de maintenir une ou plusieurs plaques **R** dont la surface supérieure S est réfléchissante. En particulier, les longerons de base **11a, 11b, 11c, 11d,** comportent des longerons de base longitudinaux **11b,** et des longerons de base transversaux **11c, 11d,** disposés de préférence à angle droit entre les longerons de base longitudinaux. Les longerons de base **11a**, **11b, 11c, 11d,** comprennent en outre des longerons de base intercalaires **11a,** disposés dans l'alignement des longerons de base longitudinaux **11b.** Les longerons de base intercalaires **11a** sont de préférence connectés par leurs deux extrémités à deux longerons de base longitudinaux **11b,** de sorte à former un ensemble linéaire **L** formé d'une alternance de longerons de base longitudinaux **11b** et de longerons de base intercalaires **11a.** Alternativement, deux ou plus de deux longerons de base intercalaires **11a** peuvent être disposés entre deux longerons de base longitudinaux **11b** pour former un ensemble linéaire **L.** Les ensembles linéaires **L1, L2, L3, L4, L5** ainsi formés sont disposés parallèlement les uns aux autres sur une surface plane **T,** telle qu'un toit d'immeuble et reliés les uns aux autres par les longerons de base transversaux **11c, 11d.** Les longerons de base ainsi associés forment un socle unique pouvant être disposé sur toute la surface disponible et permettant d'établir une assise stable pour l'installation des panneaux photovoltaïques **P.**

Les longerons de base **11a, 11b, 11c, 11d,** peuvent être optionnellement lestés ou arrimés sur des plots pour accroître leur stabilité.
Les longerons de base **11a**, **11b, 11c, 11d,** peuvent avoir les mêmes dimensions, de sorte à limiter la variété des pièces à assembler. En particulier, la longueur des longerons de base transversaux **11c, 11d** peut être identique à la longueur des longerons de base longitudinaux **11b** et des longerons de base intercalaires **11a.** Les longerons de base **11a, 11b, 11c, 11d,** sont alors de préférence interchangeables, c'est-à-dire qu'ils peuvent être indifféremment utilisés comme longerons de base longitudinaux **11b,** transversaux **11c, 11d** ou intercalaires **11a.** Les longerons de base transversaux **11b** et longitudinaux **11c, 11d** forment ainsi des cadres carrés. Alternativement, les longerons de base longitudinaux **11b** peuvent être plus courts ou plus longs que les longerons de base transversaux **11c, 11d.**

Il est notable que le ou les cadres définis par les longerons de base longitudinaux **11b** et transversaux **11c, 11d,** dans lesquels peuvent être installées une ou plusieurs plaques réfléchissantes **R,** se situent sous les panneaux photovoltaïques **P.** Les longerons de base intercalaires **11a** servent alors à espacer les panneaux photovoltaïques **P** tout en rigidifiant le socle de l'installation.

Les longerons de base longitudinaux **11b** peuvent comporter au moins un moyen de connexion (non représenté) destiné à l'installation des piliers **12a, 12b.** Un tel moyen de connexion peut comporter par exemple un ou plusieurs trous traversant les longerons longitudinaux **11b** de sorte à pouvoir y insérer un boulon. L'extrémité des piliers **12a, 12b** en contact avec un longeron de base longitudinal **11b** peut comporter un filetage adapté au boulon traversant le longeron de base longitudinal **11b** et permettre ainsi sa fixation sur le longeron longitudinal **11b.** D'autres moyens de connexion peuvent être utilisés. Les longerons de base intercalaires **11a** et les longerons de base transversaux **11c, 11d** peuvent être pourvus des mêmes moyens de connexion que les longerons de base longitudinaux **11b.** Cela facilite l'installation du dispositif d'installation **1,** en permettant d'utiliser indifféremment tous les longerons de base comme longerons de base intercalaire **11a,** longerons de base longitudinal **11b** ou longerons de base transversaux **11c, 11d.** Alternativement seuls les longerons de base longitudinaux **11b** sont pourvus des moyens de connexion adéquats pour l'installation des piliers **12a, 12b.** Cela limite ainsi les coûts de fabrication.

Alternativement, les longerons de base longitudinaux **11b** et les piliers **12a, 12b** peuvent former un ensemble non dissociable.

Il est entendu que des piliers **12a, 12b** peuvent alternativement ou en plus être connectés aux longerons de base transversaux **11c, 11d,** ou former avec les longerons de base transversaux **11c, 11d** un ensemble non dissociable.

Deux longerons de base longitudinaux **11b** d'un ensemble linéaire L peuvent être séparés d'un longeron de base intercalaire **11a.** Dans le cas où la longueur des longerons de base longitudinaux **11b** est égale à celle des longerons de base intercalaires **11a,** la surface libre entre les panneaux photovoltaïque **P** est sensiblement égale à la surface occupée par les panneaux photovoltaïques **P.** Alternativement, deux longerons de base longitudinaux **11b** d'un ensemble linéaire L peuvent être séparés par deux ou plus de deux longerons de base intercalaires **11a.** L'espacement des panneaux photovoltaïque **P** peut alors être déterminé sur le site lors du montage du dispositif d'installation, en choisissant le nombre de longerons de base intercalaires **11a** séparant deux longerons de base longitudinaux **11b.** Optionnellement, des plaques **R** peuvent être installées entre les panneaux photovoltaïques **P** sur les longerons de base intercalaires **11a** de sorte à augmenter la quantité de lumière réfléchie. Il est cependant usuel de ménager un espace libre permettant de cheminer entre les panneaux photovoltaïques **P.**

Selon une variante, la longueur des longerons de base intercalaires **11a** diffère de celle des longerons de base longitudinaux **11b.** Ils peuvent être par exemple plus courts ou plus longs que les longerons de base longitudinaux **11b.** Les longerons de base intercalaires **11a** peuvent être avantageusement plus courts que les longerons longitudinaux **11b** et se combiner par deux ou plus de deux, de sorte à pouvoir facilement adapter l'espacement entre les panneaux photovoltaïques **P.** Selon un mode de réalisation avantageux, la longueur des longerons de base intercalaires **11a** correspond à environ la moitié de celle des longerons de base longitudinaux **11b** de sorte à pouvoir limiter l'encombrement de l'installation photovoltaïque. D'autres rapports de longueurs peuvent être déterminés pour les besoins de l'installation, tels que des rapports de longueur de l'ordre d'un tiers ou deux tiers. Il est entendu que toute adaptation des rapports de longueur peut être envisagée en fonction des besoins, pour autant qu'elle permette une modularité maximale avec un minimum de pièces différentes. Le dispositif d'installation **1** comporte ainsi plusieurs formations linéaires **L1, L2, L3** etc.. parallèles les unes aux autres.

Selon un mode de réalisation, le dispositif d'installation **1** est adaptable lors du montage sur le site d'installation, notamment en termes d'espacement, d'orientation et d'inclinaison des panneaux photovoltaïques **P.**

Selon un autre mode de réalisation, le dispositif d'installation **1** est préconçu en fonction de paramètres prédéterminés. L'assemblage sur le site d'installation correspond alors à un espacement, une orientation et une inclinaison des panneaux photovoltaïques **P** prédéterminés.

Le nombre de formations linéaires **L1, L2, L3, L4, L5** dépend de la place à disposition et/ou de la surface nécessaire à la conversion de l'énergie solaire. Elles sont au minimum de deux, de sorte à former une rangée de panneaux photovoltaïques **P.** Le nombre de formations linéaires **L1, L2, L3, L4, L5** peut cependant s'élever à trois, dix ou plus de cinquante. Il n'y a en réalité pas de limite prédéfinie. Une formation linéaire L s'entend comme un ensemble de longerons de base longitudinaux **11b** et intercalaires **11a,** indépendamment de leur nombre, de leur alternance et de leurs dimensions. Par exemple le nombre de longerons de base intercalaires **11a** disposés entre deux longerons de base longitudinaux **11b** au sein d'une formation linéaire **L** peut ne pas être constant.

Le dispositif d'installation 1 comporte des piliers **12a, 12b** permettant de maintenir les panneaux photovoltaïques **P** à distance de la surface réfléchissante S des plaques **R.** Les piliers **12a, 12b** permettent en outre d'orienter les panneaux photovoltaïques **P** avec un angle d'inclinaison A par rapport à la surface horizontale T sur laquelle est disposé le dispositif d'installation **1.** A cet effet, les piliers **12a, 12b,** comprennent des piliers longs **12a** et des piliers courts **12b** de sorte à pouvoir orienter les panneaux photovoltaïques **P** selon une inclinaison prédéterminée. L'angle d'inclinaison **A** est avantageusement compris entre environ 5° et 30°, de préférence entre 5° et 15°.

De préférence, les piliers sont associés aux longerons de base longitudinaux **11b.** Les piliers long **12a,** et courts **12b,** sont solidaires des longerons de base longitudinaux **11b,** par leur première extrémité.

Les piliers **12a, 12b,** sont également solidaires des longerons d'encadrement latéraux **13** par leur seconde extrémité. De préférence, un longeron de base longitudinal **11b** est solidaire à la fois d'un pilier long **12a** et d'un pilier court **12b** et les deux piliers long **12a** et court **12b** sont tous deux solidaires d'un même longeron d'encadrement latéral13..

L'angle d'inclinaison A dépend par exemple de la différence de longueur entre les piliers longs **12a** et courts **12b,** ou de la distance qui les sépare, ou d'une combinaison de la distance qui les sépare et de leur différence de longueur. L'angle **A** peut ainsi être déterminé au moment du montage du dispositif **1.** Dans le cas où l'assemblage des piliers **12a, 12b** avec les longerons de base longitudinaux **11b** et les longerons d'encadrement latéraux **13** peut être effectué sur le site de montage, il peut être prévu sur un longeron de base longitudinal **11b** plusieurs emplacements pour l'assemblage des piliers long **12a** et court **12b.** La longueur de piliers long **12a** et court **12b** est de préférence prédéterminée lors de la conception du dispositif d'installation **1.** En particulier, la hauteur totale du dispositif d'installation **1,** correspondant à la hauteur des longerons d'encadrement supérieurs **15,** reste de préférence inférieure à environ 60 cm de sorte à limiter la prise au vent et un trop fort impact visuel. Les longerons d'encadrement inférieurs **14** surplombent le sol à une hauteur de préférence supérieure à environ 35 cm, de sorte à permettre à la lumière du soleil de se réfléchir sur les plaques réfléchissantes **R** disposées sous les panneaux photovoltaïques **P.** En particulier, la hauteur et l'emplacement des piliers **12a, 12b** sont déterminées de sorte que les longerons d'encadrement inférieur **14** surplombent la surface d'installation T à une hauteur d'au moins environ 35 cm, que les longerons d'encadrement supérieurs **15** surplombent la surface d'installation **T** à une hauteur inférieure à environ 60 cm, et que l'angle **A,** formé par les longerons de base et les longerons d'encadrement latéraux 13 soit compris entre environ 5° et 30°, de préférence entre 5° et 15°.

Alternativement, l'angle d'inclinaison **A** est déterminé lors de la conception du dispositif d'installation **1** et n'offre pas de variabilité, facilitant ainsi le montage du dispositif d'installation 1. La hauteur et l'emplacement des piliers **12a, 12b** sur les longerons de base longitudinaux **11b** sont alors prédéterminés.

L'angle d'inclinaison A est prédéterminé en fonction d'un ou plusieurs paramètres tels que la position géographique, l'altitude, le niveau d'ensoleillement moyen, les performances des panneaux photovoltaïques bifaciaux, l'espacement entre les panneaux photovoltaïques **P,** et éventuellement d'autres paramètres nécessaires à l'optimisation du rendement de la conversion énergétique. L'inclinaison des panneaux photovoltaïques **P** n'est de préférence pas modulable après leur installation. Dans le cas où l'angle d'inclinaison **A** doit faire l'objet d'une adaptation il peut être nécessaire de démonter au moins partiellement le dispositif d'installation **1,** et de modifier par exemple l'emplacement relatif des piliers longs **12a** et courts **12b** le long du longeron de base longitudinal **11b** correspondant.

Les piliers **12a** et **12b** sont alignés selon les formations linéaires L établies par les longerons longitudinaux **11b** et les longerons intercalaires **11a** de sorte à former une alternance de pilier longs **12a** et courts **12b.** Ainsi, les panneaux photovoltaïques **P** sont inclinés dans la même direction formant un angle d'inclinaison **A** avec les formations linéaires **L.**

Il est cependant des situations où les formations linéaires **L** ne peuvent être orientées de manière adéquate par rapport au soleil. Le dispositif d'installation **1** permet d'incliner les panneaux photovoltaïques **P** par rapport à la dimension transversale de l'installation, c'est-à-dire par rapport aux longerons de base transversaux **11c, 11d** connectés à angle droit aux longerons de base longitudinaux **11b** selon le plan horizontal. Pour ce faire, les longerons de base longitudinaux **11b** comportent chacun deux piliers longs **12a** ou courts **12b,** de sorte que les piliers longs **12a** soient disposés selon une première formation linéaire **L** et les piliers courts **12b** disposés selon une seconde formation linéaire **L** contigüe et parallèle à la première. Une formation linéaire **L** comporte ainsi que des piliers longs **12a** ou courts **12b.**

Selon une variante, les piliers **12a, 12b** sont connectés aux longerons de base transversaux **11c, 11d** de sorte à pouvoir incliner les panneaux photovoltaïques **P** par rapport aux longerons transversaux **11c, 11d.** A cet effet, chaque longeron de base transversal **11c, 11d** peut accueillir un pilier long 12a et un pilier court **12b.** Cette disposition peut être aisément adoptée lors du montage du dispositif d'installation **1** notamment lorsque les dimensions des longerons de base **11a, 11b, 11c, 11d** sont identiques et que les longerons de base longitudinaux **11b** peuvent être utilisés comme longerons de base transversaux **11c, 11d** et inversement.

Selon un mode de réalisation particulier, les piliers **12a, 12b** peuvent être conçus de sorte à maintenir les panneaux photovoltaïques **P** à l'horizontale, au-dessus des surfaces réfléchissante **5.** L'espacement entre les panneaux photovoltaïques **P** peut être optimisé de sorte à réfléchir un maximum de lumière vers la surface inférieure des panneaux photovoltaïques **P,** tournée vers les plaques réfléchissantes **R.**

L'extrémité des piliers **12a, 12b** non connectée aux longerons de base longitudinaux **11b** est connectée aux longerons d'encadrement latéraux **13.** Les moyens de connexion des piliers **12a, 2b** avec les longerons d'encadrement latéraux **13** peuvent être identiques aux moyens de connexion des piliers **12a, 12b** avec les longerons de base longitudinaux **11b,** dans le cas où les longerons d'encadrement latéraux **13** et les piliers **12a, 12b** sont assemblés sur le site de montage.

Les longerons d'encadrement **13, 14** et **15,** comprennent les longerons d'encadrement latéraux **13,** les longerons d'encadrement inférieurs **14** et les longerons d'encadrement supérieurs **15.** Les longerons d'encadrement latéraux **13** désignent de préférence les longerons connectés aux piliers **12a, 12b.** Les longerons d'encadrement inférieurs **14** et les longerons d'encadrement supérieurs **15** sont connectés aux longerons d'encadrement latéraux **13** de sorte à former un cadre adapté pour recevoir un panneau photovoltaïque **P.** Du fait de l'inclinaison des panneaux photovoltaïques **P,** les longerons d'encadrement inférieurs **14** se trouvent dans la position la plus basse du cadre et les longerons d'encadrement supérieurs **15** se trouvent dans la position la plus haute du cadre. Les longerons d'encadrement inférieurs **14** et supérieur **15** sont parallèles les uns aux autres et horizontaux. Les longerons d'encadrement **13, 14, 15** forment ainsi un plan incliné selon l'angle d'inclinaison **A** défini plus haut. De préférence, les longueurs des longerons d'encadrement **13, 14** et **15** sont déterminées de sorte à accueillir un unique panneau photovoltaïque **P.** Alternativement, deux ou plus de deux panneaux photovoltaïques **P** peuvent être disposés dans un encadrement formés par les longerons d'encadrement **13, 14, 15.**

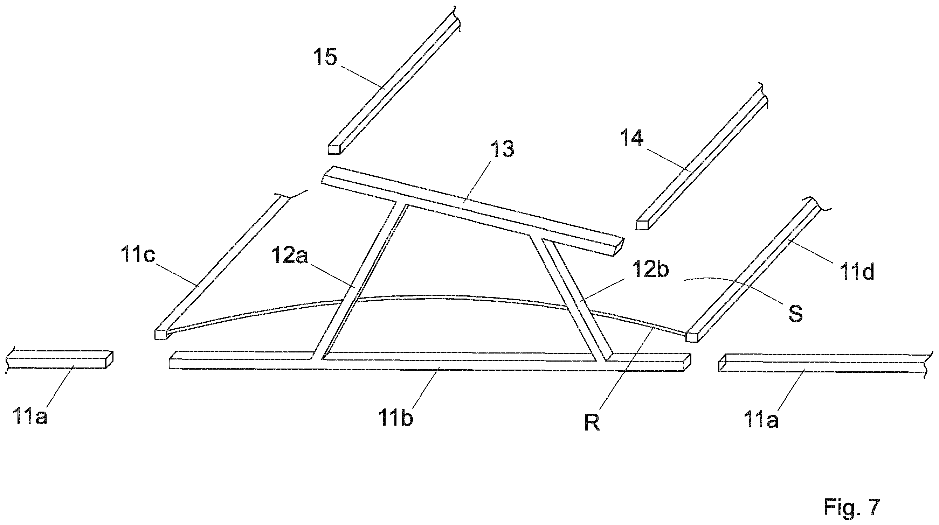

Les piliers **12a, 12b** peuvent être orientés verticalement, de sorte à former avec le longeron de base longitudinal **11b** auquel ils sont fixés un angle droit. Ils sont dans ce cas fixés au longeron d'encadrement latéral **13** correspondant selon un angle non droit, du fait de l'inclinaison du panneau photovoltaïque **P.** D'autres dispositions peuvent cependant être envisagées, où les piliers **12a, 12b** ne forment pas d'angle droit avec le longeron de base longitudinal **11b** auquel ils sont fixés, comme illustré par exemple à la figure 7. Les piliers **12a, 12b** peuvent être orientés de façon non verticale pour des raisons esthétiques ou pour une meilleure résistance de la structure.

L'ensemble des longerons d'encadrement **13, 14** et **15,** ou une partie d'entre eux, comporte une lèvre d'appui 30 sur toute leur longueur, permettant d'accueillir un ou plusieurs panneaux photovoltaïques **P.** Des moyens de maintien **22** peuvent être disposés sur les longerons d'encadrement **13, 14, 15** pour maintenir les panneaux photovoltaïques **P** en place. Les dimensions des longerons de base **11a, 11b, 11c,** et **11d** et les dimensions des longerons d'encadrement **13, 14, 15** peuvent être les mêmes. en outre, les longerons de base **11a**, **11b, 11c,** et **11d** et les longerons d'encadrement **13, 14, 15** peuvent être tous identiques et permettre indifféremment la fixation des panneaux photovoltaïques **P** et des plaques **R.**

Selon un mode de réalisation préféré, les longerons d'encadrement latéraux **13** ont une longueur inférieure aux longerons d'encadrement inférieurs **14** et supérieurs **15.** De préférence, les longerons de base longitudinaux **11b** ont une longueur inférieure aux longerons de base transversaux **11c, 11d.** Les longerons de base transversaux **11c, 11d** peuvent être de même longueur que les longerons d'encadrement inférieurs **14** et supérieurs **15.** De préférence, les longerons d'encadrement inférieur **14** et supérieur **15** sont identiques. Les longerons de base transversaux **11c, 11d** sont de préférence tous identiques.

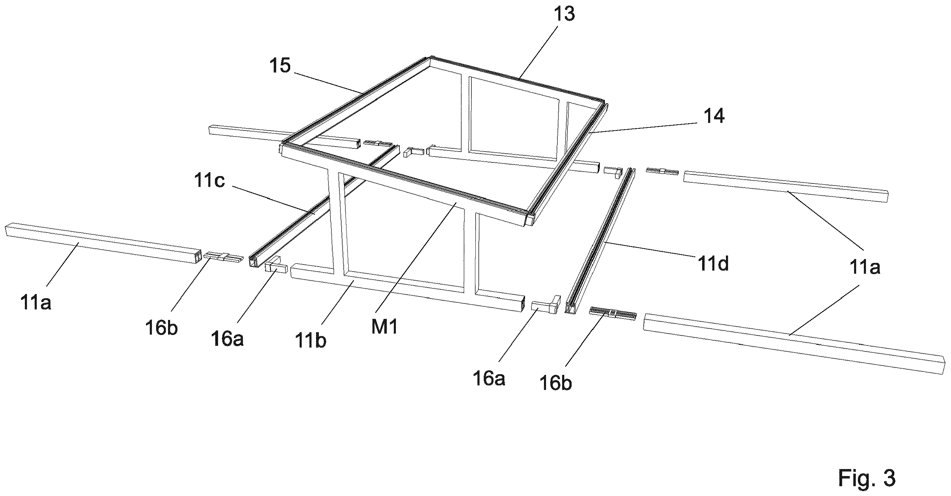

Le dispositif d'installation **1** est avantageusement modulaire avec une variété d'éléments limitée (figure 3), notamment en termes de formes et de dimensions. Les éléments du dispositif d'installation **1** regroupent notamment les longerons de base **11a**, **11b, 11c, 11d,** les longerons d'encadrement **13, 14** et **15** et les piliers **12a, 12b.** Les éléments incluent en outre les éléments de jonction **16a, 16b** permettant de combiner les longerons de base entre eux et les longerons d'encadrement entre eux.

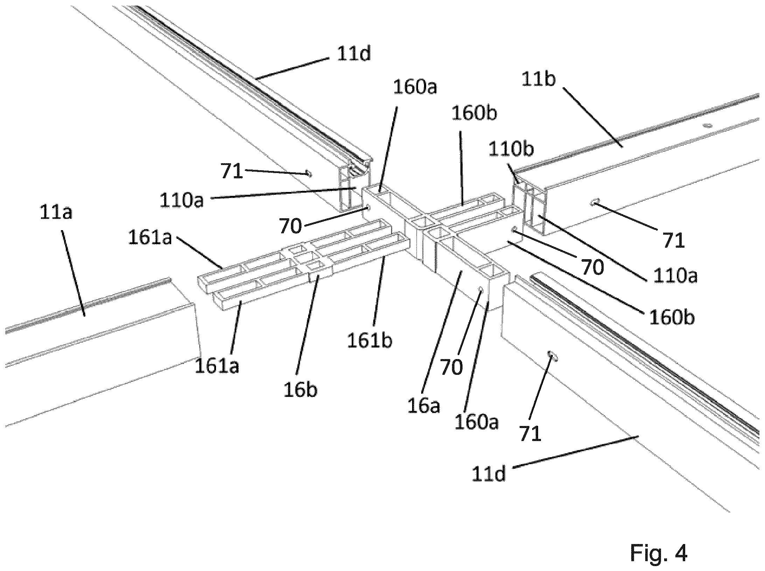

Les longerons constituant le dispositif d'installation 1 peuvent être par exemple des profilés métalliques creux tels que des profilés en aluminium ou en inox. De tels profilés comportent au moins un évidement longitudinal interne **110a, 110b** (figure 4) qui s'étend sur toute la longueur du longeron. La section du ou des évidements longitudinaux internes **110a, 110b** peut être carrée ou rectangulaire ou présenter une autre forme géométrique. De préférence, le ou les évidements longitudinaux internes **110a, 110b** sont clos sur la totalité de leur circonférence. Leur paroi peut être l'un des flancs externes du longeron correspondant ou bien une cloison interne au longeron, s'étendant sur toute sa longueur. Cela n'exclut pas que des ouvertures ponctuelles peuvent y être aménagées, telles que des trous adaptés au passage de vis, de boulons ou de goupilles.

Le ou les évidements longitudinaux internes **110a, 110b,** sont ouverts aux extrémités des longerons. Ils peuvent ainsi accueillir un ou plusieurs éléments de jonction **16a, 16b** (figure 4). Les éléments de jonctions peuvent comprendre des éléments de jonction coudés **16a,** permettant de connecter deux longerons en formant un angle. L'angle de jonction est de préférence de 90°C, mais d'autres angles de jonctions peuvent être prévus. Un élément de jonction coudé **16a** peut alors prendre la forme d'une équerre, dont les dimensions et la forme géométrique correspondent à celles d'au moins un des évidements longitudinaux internes **110a, 110b** de deux longerons à connecter. Les longerons transversaux **11d** peuvent ainsi être facilement connectés aux longerons longitudinaux **11b** au moyen d'éléments de jonction coudés **16a.**

Un élément de jonction coudé **16a** peut être en forme de « L » ou bien en forme de « T », permettant de connecter respectivement deux ou trois longerons. De préférence, les éléments de jonction coudés **16a** sont tous identiques et sont en forme de « L », comprenant une première partie **160a** et une seconde partie **160b,** orthogonale à la première partie. Dans le cas où plus de deux longerons doivent être connectés, deux éléments de jonctions coudés **16a** peuvent être utilisés. Chaque élément de jonction coudé **16a** peut être complémentaire d'un évidement longitudinal interne **110a, 110b** distinct. En d'autres termes, plusieurs évidements longitudinaux distincts peuvent être ménagés dans chacun des longerons et accueillir chacun un élément de jonction.

Les éléments de jonction comprennent en outre des éléments de jonction linéaires **16b,** permettant de connecter deux longerons selon un alignement donné. Les longerons intercalaires **11a** et les longerons longitudinaux **11b** peuvent par exemple être connectés les uns aux autres au moyen de tels éléments de jonctions linéaires **16b.** A cette fin, chacun des éléments de jonction linéaires **16b** comporte au moins une première partie **161a** et au moins une seconde partie **161b,** disposée dans l'alignement de la ou des premières parties **161a.** Les dimensions et la forme géométrique de la ou des premières parties **161a** de l'élément de jonction linéaire **16b** sont complémentaires d'un ou de plusieurs évidements longitudinaux internes **110a, 110b** ménagés dans un premier longeron. Les dimensions et la forme géométrique de la ou des secondes parties **161b** de l'élément de jonction linéaire **16b** sont complémentaires d'un ou de plusieurs évidements longitudinaux internes ménagés dans un second longeron, pouvant être ainsi connecté au premier longeron. Selon un mode de réalisation, un élément de jonction linéaire **16b** comporte deux premières parties **161a** parallèles, pouvant être insérées dans deux évidements longitudinaux internes distincts d'un premier longeron, et deux secondes parties **161b** parallèles, pouvant être insérées dans deux évidements longitudinaux internes distincts d'un second longeron.

L'ensemble des éléments de jonction **16a, 16b** ou une partie d'entre eux peuvent être pourvus de moyen de fixation permettant d'être fixés aux longerons une fois insérés dans les extrémités des évidements longitudinaux internes. Un tel moyen de fixation peut par exemple prendre la forme d'un trou **70** adapté au passage d'une goupille ou d'un boulon. Le trou **70** d'un élément de jonction **16a, 16b** est disposé de sorte à coïncider avec des ouvertures **71** disposées sur les longerons.. D'autres moyens tels que des clips peuvent être prévus. Les ouvertures **71** peuvent être circulaires et correspondre au diamètre des trous **70** des éléments de jonction **16a, 16b.** Elles sont de préférence oblongues de sorte à compenser les éventuels effets de dilatation du dispositif d'installation, une fois monté, ou de sorte à faciliter le montage. Les ouvertures **71** sont de préférence latérales, mais cela n'exclut pas que des ouvertures soient ménagées sur les surfaces supérieures ou inférieures des longerons.

Selon la disposition spécifique illustrée à la figure 4, les longerons de base transversaux **11d** comportent chacun un évidement longitudinal interne **110a** adapté pour recevoir une première partie **160a** d'un élément de jonction coudé **16a,** les longerons de base longitudinaux **11b** comportent chacun deux évidements longitudinaux internes **110a** adaptés pour recevoir une seconde partie **160b** d'un élément de jonction coudé **16a,** et au moins un évidement longitudinal interne **110b** adapté pour recevoir au moins une seconde partie **161b** d'un élément de jonction linéaire **16b,** et les longerons de base intercalaires **11a** comportent au moins un évidement longitudinal interne adapté pour recevoir au moins une première partie **161a** d'un élément de jonction linéaire **16b.** De la sorte, un longeron de base intercalaire **11b** peut être connecté avec deux longerons de base transversaux **11c, 11d** au moyen de deux éléments de jonction coudés 16a et avec un longeron de base longitudinal **11b** au moyen d'un élément de jonction linéaire **16b.**

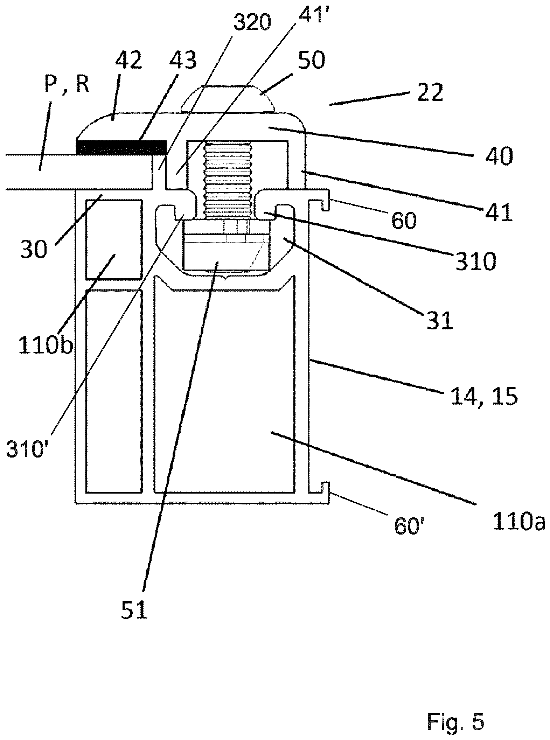

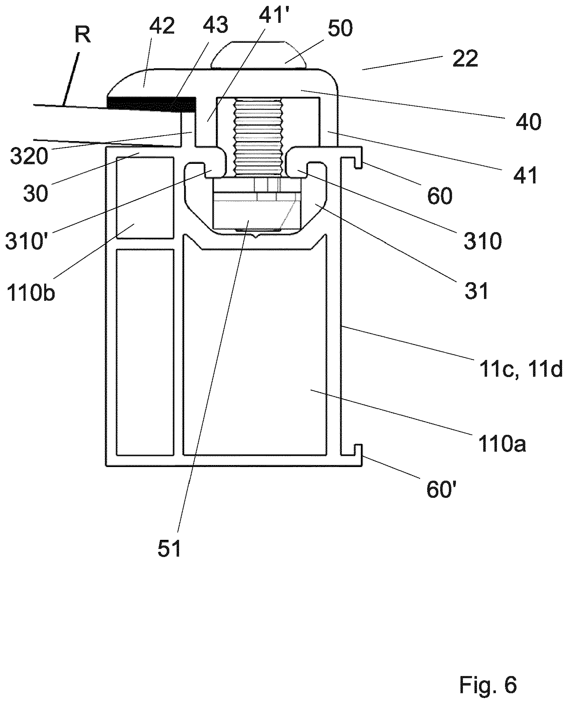

Les longerons peuvent en outre comporter un évidement longitudinal ouvert **31** (figure 5, 6) sur l'une de leurs faces, soit sur la totalité de leur longueur, soit sur des portions de leur longueur. De tels évidements longitudinaux ouverts **31** peuvent comporter des lèvres **310, 310'** permettant de maintenir dans l'évidement longitudinal ouvert **31** un insert **51** tout en laissant une ouverture suffisamment large pour y passer un moyen de fixation **50** accessible par l'extérieur du longeron. L'insert **51** peut être un écrou ou tout autre dispositif de serrage. Le moyen de fixation correspondant **50** peut être un boulon. Un tel évidement longitudinal ouvert **30** est de préférence disposé, le cas échéant, sur la face supérieur du longeron.

Les longerons permettent grâce à de tels évidements longitudinaux ouverts **31,** d'accueillir des moyens de maintien **22** des panneaux photovoltaïques **P** ou des plaques réfléchissantes **R.** Par exemple, de tels moyens de maintien **22** peuvent comporter un corps **40,** pourvu d'un ou plusieurs trous permettant à un ou plusieurs moyens de fixation 50 de solidariser le moyen de maintien **22** au longeron. Les lèvres **310, 310'** de l'évidement ouvert **31** peuvent être utilisées à cette fin en maintenant l'insert **51,** couplé au moyen de fixation **50,** dans l'évidement ouvert **31.** Le moyen de maintien **22** peut comprendre une patte de maintien **42,** qui s'étend dans le prolongement du corps **40.**

Le moyen de maintien **22** comporte en outre au moins un élément d'appui **41**, **41'** permettant de maintenir le corps **40** et la patte de maintien **42** à distance du bord extérieur du longeron sur lequel le moyen de maintien **22** est fixé.

Les longerons peuvent être pourvus d'une surface d'appui **30** (figures 5 et 6) sur laquelle peut reposer un panneau photovoltaïque **P** ou une plaque réfléchissante **R.** La surface d'appui **30** s'étend de préférence sur toute la longueur du longeron de sorte à offrir un appui homogène au panneau photovoltaïque **P** ou à la plaque réfléchissante **R.** La surface d'appui **30** est juxtaposée à un évidement longitudinal ouvert **31.** La largeur de la surface d'appui 30 peut être d'environ la moitié de la largeur du longeron correspondant, ou bien inférieure à la moitié de la largeur du longeron correspondant. Dans tous les cas, la largeur de la surface d'appui 30 doit être suffisante pour supporter le panneau photovoltaïque **P** en dépit de ses éventuelles déformations dues par exemple au vent ou à la neige. La largeur de la surface d'appui **30** n'est dans tous les cas pas inférieure à 5 mm ou 8 mm, de préférence pas inférieure à 10 mm. Elle peut être comprise entre 10 et environ 15 mm . La largeur de la surface d'appui **30** n'est dans tous les cas pas supérieure à la distance séparant les cellules photovoltaïques du rebord du panneau photovoltaïque **P..**

Les longerons sur lesquels repose un panneau photovoltaïque **P** ou une plaque réfléchissante **R** sont pourvus d'une surface d'appui **30** et d'un évidement longitudinal ouvert **31** juxtaposé à la surface d'appui **30** de sorte à pouvoir maintenir le panneau photovoltaïque **P** ou la plaque réfléchissante **R** au moyen de un ou plusieurs moyens de maintien **22.**

Les longerons sur lesquels repose un panneau photovoltaïque **P** ou une plaque réfléchissante **R** sont de préférence pourvus d'une butée longitudinale **320** permettant de caler le panneau photovoltaïque **P** ou la plaque réfléchissante **R,** de sorte à éviter tout glissement par rapport aux longerons. La butée longitudinale **320** peut prendre la forme d'une surface perpendiculaire à la surface d'appui **30** qui s'étend sur toute la longueur du longeron sur lequel repose le panneau photovoltaïque **P** ou la plaque réfléchissante R. La butée longitudinale **320** s'étend entre la surface d'appui **30** et l'évidement longitudinal ouvert **31.** La hauteur de la butée longitudinale 320 peut être par exemple égale à l'épaisseur du panneau photovoltaïque **P** ou de la plaque réfléchissante **R,** comme illustrée aux figures 5 et 6. Le moyen de maintien **22** surplombant la butée longitudinale **320,** le fait que cette dernière soit d'une hauteur égale à l'épaisseur du panneau photovoltaïque **P,** ou de celle de la plaque réfléchissante **R,** permet d'éviter qu'une pression excessive s'exerce par le moyen de maintien **22** sur le panneau photovoltaïque **P** ou sur la plaque réfléchissante **R.** Dans ces conditions, l'élément d'appui **41'** le plus proche de la butée longitudinale **320** peut devenir superflu. L'élément de maintien **22** peut alors ne comporter qu'un élément d'appui **41,** la butée longitudinale **320** faisant office de second élément d'appui.

Alternativement, la hauteur de la butée longitudinale **320** peut être supérieure à l'épaisseur du panneau photovoltaïque **P** de sorte à ménager un jeu entre la surface supérieure du panneau photovoltaïque **P,** ou la plaque réfléchissante **R,** et la patte de maintien **42.** Ce jeu peut être comblé par une couche de matière amortissante **43.**

Il est entendu que le moyen de maintien **22** permet de maintenir un panneau photovoltaïque **P** ou une plaque réfléchissante **R** sans exercer de force de serrage sur la surface du panneau photovoltaïque **P** ou de la plaque réfléchissante **R.** En d'autres termes, le moyen de maintien **22** se limite à maintenir le panneau photovoltaïque **P** ou la plaque réfléchissante **R** en contact avec la surface d'appui **30** correspondante, avec une force de maintien contrôlée. Les éléments d'appui **41, 41'** permettent en effet de maintenir une distance entre la patte de maintien **42** et la surface d'appui **30,** suffisante pour éviter toute pression excessive sur les faces du panneau photovoltaïque **P** tout en assurant son maintien. Une telle distance entre la patte de maintien **42** et la surface d'appui **30** est au moins égale à l'épaisseur du panneau photovoltaïque **P** ou de la plaque réfléchissante **R,** de préférence supérieure à l'épaisseur du panneau photovoltaïque **P** ou de la plaque réfléchissante **R.** La distance entre la patte de maintien **42** et la surface d'appui **30** peut par exemple correspondre à l'épaisseur du panneau photovoltaïque **P** augmentée d'un jeu compris entre environ 0.5 mm et 5 mm, de préférence de l'ordre de 1 mm à 3 mm. Le jeu ainsi ménagé peut être comblé par une couche de matière élastique et amortissante.

La surface de la patte de maintien **42** faisant face à la surface d'appui **30** peut en effet être pourvue d'une couche amortissante **43** comprenant un polymère élastique. Alternativement ou en plus, une telle couche amortissante **43** peut être disposée sur la surface d'appui **30.**

Selon un mode de réalisation, l'ensemble des longerons d'encadrement latéraux **13,** inférieur **14** et supérieur **15** comportent une surface d'appui **30** et un évidement longitudinal ouvert **31** juxtaposé à la surface d'appui **30.** De la sorte l'ensemble des longerons d'encadrement latéraux **13,** inférieur **14** et supérieur **15** peuvent recevoir un ou plusieurs moyens de maintien **22** permettant de maintenir un panneau photovoltaïque **P** sur les surfaces d'appui **30** des longerons d'encadrement.

Alternativement, seuls les longerons d'encadrement inférieurs **14** et supérieurs **15** comportent une surface d'appui **30** et un évidement longitudinal ouvert **31** juxtaposé à la surface d'appui **30.** Un ou deux moyens de maintien **22** sont disposés sur chaque longeron inférieur **14** et supérieur **15.**

L'ensemble des longerons de base transversaux **11c, 11d** et des longerons de base longitudinaux **11b** peut être pourvu d'un évidement longitudinal ouvert **31** et d'une surface d'appui 30 juxtaposée. Alternativement, seuls les longerons de base transversaux **11c, 11d** sont pourvus d'un évidement longitudinal ouvert **31** et d'une surface d'appui **30** juxtaposée.

L'ensemble des longerons de base longitudinaux **11b,** intercalaires **11a** et transversaux **11c, 11d** ou une partie d'entre eux, et/ou l'ensemble des longerons d'encadrement latéraux **13,** inférieurs **14** et supérieurs **15,** ou une partie d'entre eux, peuvent comporter sur l'une de leurs faces extérieures un dispositif d'accroche. Un tel dispositif d'accroche permet de fixer sur la face correspondante du ou des longerons une pièce d'habillage telle qu'un cache en polymère, souple ou rigide (non représentée). Selon un mode de réalisation, le dispositif d'accroche comporte deux lèvres ou nervures **60, 60'** sur lesquelles peut être clipsé une pièce d'habillement. L'espace ainsi délimité par la pièce d'habillement et la face extérieure du longeron peut être utilisé par exemple pour le passage de câbles électriques.

Les panneaux photovoltaïques P sont généralement de forme rectangulaire. Ils sont de préférence inclinés selon leur plus petite dimension de sorte à limiter la hauteur du dispositif d'installation **1.** En d'autres termes, la longueur des longerons d'encadrement latéraux **13** est inférieure à celle des longerons inférieurs **14** et supérieurs **15,** la longueur des longerons d'encadrement latéraux **13** étant adaptée à la largeur des panneaux photovoltaïques **P** et celle des longerons d'encadrement inférieurs **14** et supérieurs **15** étant adaptée à leur longueur.

Les plaques réfléchissantes **R** sont de préférence rectangulaires et disposées selon la même orientation que les panneaux photovoltaïques **P** qui les surplombent, c'est-à-dire que leur longueur est orientée dans le sens transversal du dispositif d'installation **1** et que leur largeur est orientée dans le sens longitudinal.

Selon un mode de réalisation, la longueur ou la largeur des plaques réfléchissantes **R** est supérieure à la longueur des longerons correspondants, de sorte à imprimer une courbure convexe à la plaque réfléchissante **R** lorsqu'elle est fixée sur les longerons. Une telle courbure facilite l'écoulement de l'eau et des salissures. En particulier, la largeur des plaques réfléchissantes **R** est supérieure à la longueur des longerons de base longitudinaux **11b** sur lesquels elle repose. La figure 6 illustre l'assemblage d'une plaque réfléchissante **R** sur un longeron de base transversal **11d, 11c,** lorsque sa largeur excède la longueur des longerons de base longitudinaux **11b.** Grâce à l'élément d'appui **41** du moyen de maintien **22,** la distance minimale entre la patte de maintien **42** et la surface d'appui **30** est préservée et permet une telle courbure convexe de la plaque réfléchissante **R.** Selon le degré de courbure désiré, la largeur d'une plaque réfléchissante **R** peut dépasser la longueur d'un longeron de base longitudinal **11b** de 1 cm à 5 cm, ou de l'ordre de 2 cm à 3 cm environ.

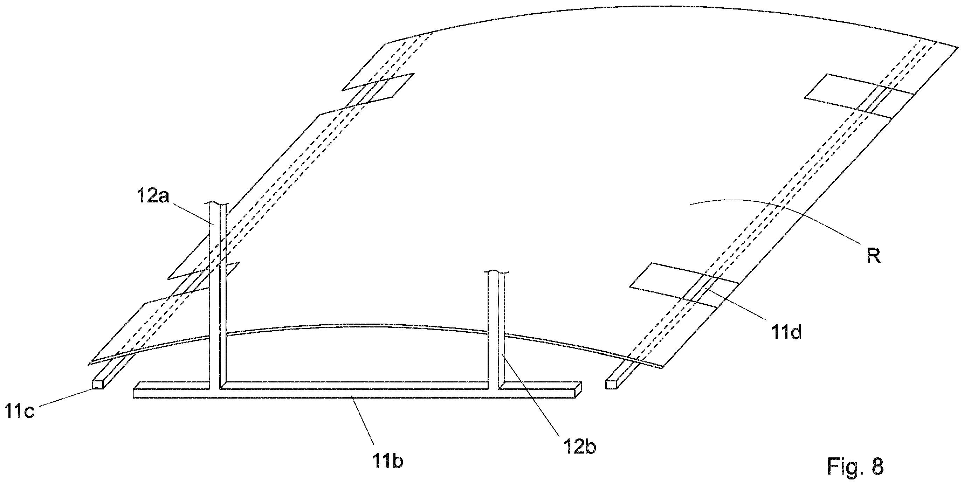

Les dimensions des plaques réfléchissantes **R** disposées sous les panneaux photovoltaïques **P** peuvent être égales ou proches de celles des panneaux photovoltaïques **P.** Leur surface correspond alors approximativement à la surface des panneaux photovoltaïques **P.** Le dispositif d'installation **1** peut alternativement permettre le montage de plaques réfléchissante **R** de plus grande surface. Par exemple, les longerons de base longitudinaux **11b** peuvent être significativement plus longs que les longerons d'encadrement latéraux **13** du dispositif d'installation **1** (figure 7). Le terme « significativement » désigne une différence de longueur d'au moins 5%, de préférence au moins 10%, voire d'au moins 20%. Les longerons de base transversaux **11c, 11d** sont alors décalés par rapport aux longerons d'encadrement inférieur **14** et supérieur **15,** et empiètent sur l'espace libre qui sépare les panneaux photovoltaïques **P,** tout en laissant libre un passage pour cheminer entre les rangées de panneaux photovoltaïques **P.** Alternativement, les longerons de base transversaux **11c, 11d** peuvent être disposés à l'aplomb des longerons d'encadrement inférieur **14** et supérieur **15** (figure 8) et conçus pour laisser dépasser les plaques réfléchissantes **R** dans l'espace libre qui sépare les panneaux photovoltaïques **P.** A cet effet, la butée longitudinale **320** des longerons de base transversaux **11c, 11d** peut être interrompue entre les emplacements prévus pour les moyens de maintien **22.** La plaque réfléchissante **R** reste maintenue sur la butée longitudinale **320** aux endroits prédéfinis et comporte des prolongations qui s'étendent pardessus les longerons de base transversaux **11c, 11d** aux endroits où la butée longitudinale **320** est interrompue. D'autres dispositions peuvent être envisagées pour étendre les plaques réfléchissantes **R** sur une surface plus grande que celle des panneaux photovoltaïques **P.** La surface des plaques réfléchissantes **R** peut être ainsi supérieure à celle des panneaux photovoltaïques **P** d'environ 10%, voire de 20% ou 30% ou même 50%. La surface supplémentaire des plaques réfléchissantes **R** par rapport à celle des panneaux photovoltaïques **P** peut être répartie de manière égale de part et d'autre des longerons transversaux **11c, 11d.** Il n'est cependant pas exclu que la surface supplémentaire des plaques réfléchissantes **R** par rapport à celle des panneaux photovoltaïques **P** soit répartie de manière différente.

L'ensemble des longerons de base longitudinaux **11b**, transversaux **11c, 11d** et intercalaires **11a** ou une partie d'entre eux peut comporter au moins un évidement longitudinal interne **110a** complémentaire d'un élément de jonction courbe **16a** et au moins un évidement longitudinal interne **110b** complémentaire d'un élément de jonction linéaire **16b.** Selon un mode de réalisation, les longerons de base transversaux **11c, 11d** comportent un évidement longitudinal interne **110a** complémentaire d'un élément de de jonction courbe **16a,** un évidement longitudinal ouvert **31** et une surface d'appui **30** juxtaposée à l'évidement longitudinal ouvert **31.**

Les longerons de base longitudinaux **11b** et intercalaires **11a** ne comportent de préférence aucune surface d'appui ni évidement longitudinal ouvert **31,** mais sont pourvus de deux évidements longitudinaux internes **110a** complémentaires d'éléments de jonction coudé **16a** et d'au moins un évidement longitudinal interne **110b** complémentaire d'au moins un élément de jonction linéaire **16b.**

Le dispositif d'installation **1** peut comprendre des modules **M1** préassemblés (figure 3). Par exemple, Les longerons de base longitudinaux **11b** peuvent être préassemblés à deux piliers **12a, 12b,** de longueurs différentes ou de même longueur, lesquels sont préassemblés avec un longeron d'encadrement latéral **13.** Le préassemblage peut être fait en atelier ou en usine, ce qui permet de minimiser le temps de montage sur site sans perdre en modularité. En effet, les modules **M1** peuvent être alignés selon une formation linéaire **L** ou au contraire s'insérer perpendiculairement entre les formations linéaires **L** et faire office de structures transversales. Dans ce dernier cas le longeron de base fait office de longeron de base transversal **11c, 11d.** Le préassemblage peut consister par exemple en un assemblage démontable, comportant des éléments amovibles tels que des vis, des boulons ou des clips. Alternativement, le préassemblage peut consister en un assemblage définitif tel que des soudures.

Il est notable que le dispositif d'installation **1** selon la présente invention forme un support unique permettant de fixer à la fois les plaques réfléchissantes **R** et les panneaux photovoltaïques bifaciaux P sans qu'il ne soit nécessaire de modifier la surface T sur laquelle est installé le dispositif d'installation **1.** Les panneaux photovoltaïques bifaciaux se caractérisent par une face supérieure, adaptée à la conversion de la lumière directement reçue du soleil, et une face inférieure tournée vers le sol et adaptée à la conversion de la lumière réfléchie. Les panneaux photovoltaïques **P** peuvent en outre être pourvus d'un cadre de maintien ou de protection. Dans ce cas, ils peuvent être installés sur le dispositif d'installation **1** avec le cadre de maintien ou de protection. Alternativement, un panneau photovoltaïque peut être dépourvu d'un tel cadre de maintien ou de protection et déposé directement sur le dispositif d'installation **1.** Tout autre type de panneaux photovoltaïque peut être disposé sur le dispositif d'installation **1.** Des panneaux non photovoltaïques tels que des panneaux thermiques peuvent également être disposés sur le dispositif d'installation **1.**

Les plaques **R** peuvent être par exemple des plaques de polymère naturel ou synthétique comprenant au moins une surface de couleur claire, de préférence blanche, apte à réfléchir la lumière. La surface **S** des plaques **R** disposées sur le dispositif d'installation **1** se caractérise par un albédo élevé, supérieur à 0.5, de préférence supérieure à 0,7 et plus particulièrement supérieure à 0.85. Les plaques **R** peuvent être lisses et planes. Alternativement, elles peuvent être rainurées de sorte à refléter la lumière de manière plus diffuse. Les rainures permettent en outre maintenir la surface **S** plus propre. Alternativement ou en plus, les plaques **R** peuvent être pourvues de trous de sorte à permettre l'évacuation d'éventuelles saletés qui diminueraient leur albédo. De préférence les plaques réfléchissantes **R** permettent de diffuser la lumière réfléchie.

Dans la présente description le terme « horizontal » s'inscrit dans les sens communément admis, et désigne toute surface approximativement horizontale. Une surface est considérée comme approximativement horizontale si son inclinaison moyenne est inférieure à 5°. Le terme « vertical » s'inscrit dans le sens communément admis. Sera admis comme vertical tout élément formant un angle droit avec un élément « horizontal » tel que défini ici. La direction longitudinale du dispositif d'installation **1** est définie par les formations linéaires **L** du dispositif d'installation **1,** constituée de longerons de base longitudinaux **11b** et intercalaires **11a.** La direction transversale du dispositif d'installation **1** correspond à la direction des longerons de base transversaux **11c, 11b,** disposés dans le plan horizontal perpendiculairement aux formations linéaires **L.**

Le terme « juxtaposé » s'entend comme contigu et orienté dans la même direction. Une surface d'appui **30** juxtaposée à un évidement longitudinal ouvert **31** signifient que la surface d'appui **30** et l'évidement longitudinal ouvert **31** sont tous deux disposé sur une même face d'un longeron et orientés selon la dimension longitudinale de ce longeron.

### Numéros de référence employés sur les figures

- P: Panneaux photovoltaïques bifaciaux
- A: Angle d'inclinaison
- L, L1, L2: Formations linéaires
- R: Plaque
- S: Surface réfléchissante
- T: Toit
- 11a: Longerons intercalaires
- 11b: Longerons longitudinaux
- 11c, 11d: Longerons transversaux
- 12a, 12b: Piliers
- 14: Longeron d'encadrement inférieur
- 15: Longeron d'encadrement supérieur
- 16a: Élément de jonction coudé
- 16b: Élément de jonction linéaire
- 110a, 110b: Évidement longitudinaux internes
- 160a, 160b: Parties d'éléments de jonction coudés
- 161a, 161b: Parties d'éléments de jonction linéaires
- 22: Moyen de maintien
- 30: Surface d'appui
- 31: Évidement longitudinal ouvert
- 310, 310': Lèvres
- 320: Butée longitudinale
- 40: Corps de moyen de maintien
- 41, 41': Élément d'appui
- 42: Patte de maintien
- 43: Couche d'amortissement
- 50: Moyen de fixation
- 51: insert
- 60, 60': Dispositif d'accroche

## Revendications

1. Dispositif d'installation (1) comprenant des longerons de base (11a, 11b, 11c, 11d) et des longerons d'encadrement (13, 14, 15), les longerons de base formant un socle et les longerons d'encadrement formant un support pour l'installation de panneaux photovoltaïques bifaciaux (P), ledit dispositif d'installation comprenant des piliers (12a ,12b) combinés à au moins certains des longerons de base et à au moins certains des longerons d'encadrement, où :
- les longerons de base (11a, 11b, 11c, 11d) comportent des longerons de base longitudinaux (11b), transversaux (11c, 11d) et intercalaires (11a) combinés entre eux par des éléments de jonction (16a, 16b),
- les longerons d'encadrement (13, 14, 15) comportent des longerons d'encadrement latéraux (13), inférieur (14) et supérieur (15) combinés entre eux par des éléments de jonction (16a, 16b), ,
**caractérisé en ce que** lesdits piliers (12a ,12b) comprennent des piliers longs (12a) et courts (12b) de sorte que les longerons d'encadrement et les longerons de base associés auxdits piliers long et court forment un angle (A) compris entre 5° et 30° et **en ce que** l'un ou plusieurs des longerons de base longitudinaux (11b), transversaux (11c, 11d) et intercalaires (11a) et l'un ou plusieurs des longerons d'encadrement latéraux (13), inférieur (14) et supérieur (15) sont pourvus d'une surface d'appui (30) s'étendant sur toute leur longueur, ladite surface d'appui (30) étant juxtaposée à un évidement longitudinal ouvert (31) et **en ce que** ledit dispositif d'installation comporte en outre plusieurs moyens de maintien (22) coopérant avec ledit évidement longitudinal ouvert (31), lesdits éléments de maintien (22) comprenant chacun une patte de maintien (42) surplombant la surface d'appui (30) à une distance prédéfinie.

2. Dispositif selon la revendication 1, **caractérisé en ce que** lesdits moyens de maintien (20) comportent chacun un corps (40) et au moins un élément d'appui (41), ladite patte de maintien (42) s'étendant dans le prolongement du corps (40) et ledit au moins un élément d'appui (41) reposant sur le bord extérieur dudit évidement longitudinal ouvert (31).

3. Dispositif selon l'une des revendications 1 ou 2, **caractérisé en ce que** lesdits moyens de maintien (20) sont pourvus d'au moins un trou permettant le passage d'un moyen de fixation (50) et **en ce que** ledit évidement longitudinal ouvert (31) comportent deux lèvres (310, 310') permettant de retenir un insert (51) dans ledit évidement longitudinal ouvert (31), ledit insert (51) et ledit moyen de fixation (50) coopérant de sorte à solidariser les moyens de maintien (22) sur lesdits un ou plusieurs longerons de base longitudinaux (11b), transversaux (11a) et intercalaires (11a) et lesdits un ou plusieurs longerons d'encadrement latéraux (13), inférieur (14) et supérieur (15).

4. Dispositif selon l'une des revendications 1 à 3, **caractérisé en ce que** l'une ou l'autre de la surface d'appui (30) et de la patte de maintien (42) comporte une couche d'amortissement (43).

5. Dispositif selon l'une des revendications 1 à 4, **caractérisé en ce que** lesdits longerons de base longitudinaux (11b), transversaux (11c, 11d) et intercalaires (11a) et lesdits longerons d'encadrement latéraux (13), inférieur (14) et supérieur (15) comportent au moins un évidement longitudinal interne (110a, 110b) ouvert aux extrémités desdits longerons et **en ce que** lesdits éléments de jonction coudés (16a) et linéaires (16b) comportent au moins une première partie (160a, 161a) et une seconde partie (160b, 161b) dont des dimensions et la géométrie sont adaptées pour s'insérer dans lesdits évidements longitudinaux internes (110a, 110b).

6. Dispositif selon l'une des revendications 1 à 5, **caractérisé en ce que** les longerons de base longitudinaux (11b), les piliers (12a, 12b) et les longerons d'encadrement latéraux (13) sont préassemblés de sorte à former un module d'assemblage (M1) du dispositif d'installation (1).

7. Dispositif selon l'une des revendications précédentes, **caractérisé en ce que** les longerons d'encadrement latéraux (13), inférieurs (14) et supérieurs (15) et les longerons de base transversaux (11c, 11d) comportent une surface d'appui (30) et un évidement longitudinal ouvert (31), et **en ce que** deux moyens de maintien (22) sont disposés sur chacun des longerons d'encadrement inférieurs (14) et supérieurs (15) et sur chacun des longerons de base transversaux (11c, 11d).

8. Dispositif selon l'une des revendications précédentes, **caractérisé en ce qu'**il comprend une plaque réfléchissante (R) souple disposée sur les surfaces d'appui (30) des longerons de base transversaux (11c, 11d) et maintenue par au moins un moyen de maintien (22) disposé sur chaque longeron de base transversal (11c, 11d).

9. Dispositif selon la revendication 8, **caractérisé en ce que** la largeur de la plaque réfléchissante (R) est supérieure à la longueur des longerons de base longitudinaux (11b) et **en ce que** sa longueur correspond à la longueur des longerons de base transversaux (11c, 11d) sur lesquels elle est maintenue, de sorte à produire une surface cintrée convexe entre lesdits longerons de base transversaux (11c, 11d).

10. Dispositif selon l'une des revendications 1 à 9, dans lequel lesdits piliers courts (12b) sont disposés de sorte que les longerons d'encadrement inférieurs (14) surplombent le sol à une hauteur de préférence supérieure à environ 35 cm.

11. Dispositif selon l'une des revendications 1 à 10, dans lequel la hauteur totale du dispositif d'installation (1), correspondant à la hauteur des longerons d'encadrement supérieurs (15), reste de préférence inférieure à environ 60 cm.

## Patentansprüche

1. Installationsvorrichtung (1) mit Grundlängsträgern (11a, 11b, 11c, 11d) und Rahmenlängsträgern (13, 14, 15), wobei die Grundlängsträger einen Sockel bilden und die Rahmenlängsträger einen Träger für die Installation von bifazialen Photovoltaikmodulen (P) bilden, wobei die Installationsvorrichtung Stützen (12a ,12b) umfasst, die mit mindestens einigen der Grundlängsträger und mindestens einigen der Rahmenlängsträger verbunden sind, wobei:
- die Grundlängsträger (11a, 11b, 11c, 11d) umfassen Längs- (11b), Quer- (11c, 11d) und Zwischen-Grundlängsträger (11a), die durch Verbindungselemente (16a, 16b) miteinander verbunden sind,
- die Rahmenlängsträger (13, 14, 15) einen seitlichen (13), unteren (14) und oberen (15) Rahmenlängsträger umfassen, die durch Verbindungselemente (16a, 16b) miteinander verbunden sind,
**dadurch gekennzeichnet, dass** die Stützen (12a ,12b) lange (12a) und kurze (12b) Stützen umfassen, so dass die den langen und kurzen Stützen zugeordneten Rahmen- und Grundlängsträger einen Winkel (A) zwischen 5° und 30° bilden, und dass einer oder mehrere der längsgerichteten (11b), quergerichteten (11c, 11d) und dazwischenliegenden (11a) Grundlängsträger und einer oder mehrere der seitlichen Rahmenlängsträger (13), untere (14) und obere (15) mit einer Auflagefläche (30) versehen sind, die sich über ihre gesamte Länge erstreckt, wobei die Auflagefläche (30) neben einer offenen Längsausnehmung (31) liegt, und dass die Installationsvorrichtung ferner mehrere Haltemittel (22) aufweist, die mit der offenen Längsausnehmung (31) zusammenwirken, wobei die Halteelemente (22) jeweils eine Haltelasche (42) umfassen, die die Auflagefläche (30) in einem vorbestimmten Abstand überragt.

2. Vorrichtung nach Anspruch 1, **dadurch gekennzeichnet, dass** die Haltemittel (20) jeweils einen Körper (40) und mindestens ein Stützelement (41) umfassen, wobei sich die Haltelasche (42) in der Verlängerung des Körpers (40) erstreckt und das mindestens eine Stützelement (41) auf dem Außenrand der offenen Längsausnehmung (31) aufliegt.

3. Vorrichtung nach einem der Ansprüche 1 oder 2, **dadurch gekennzeichnet, dass** die Haltemittel (20) mit mindestens einem Loch versehen sind, das den Durchgang eines Befestigungsmittels (50) ermöglicht, und dass die offene Längsausnehmung (31) zwei Lippen (310, 310') aufweist, die es ermöglichen, einen Einsatz (51) in der offenen Längsausnehmung (31) zu halten, wobei der Einsatz (51) und das Befestigungsmittel (50) so zusammenwirken, dass die Haltemittel (22) an dem einen oder den mehreren längsgerichteten (11b), quergerichteten (11a) und dazwischenliegenden (11a) Grundlängsträger und dem einen oder den mehreren seitlichen (13), unteren (14) und oberen (15) Rahmenlängsträger fest verbunden werden.

4. Vorrichtung nach einem der Ansprüche 1 bis 3, **dadurch gekennzeichnet, dass** entweder die Auflagefläche (30) oder die Haltelasche (42) eine Dämpfungsschicht (43) aufweist.

5. Vorrichtung nach einem der Ansprüche 1 bis 4, **dadurch gekennzeichnet, dass** die längsgerichteten (11b), quergerichteten (11c, 11d) und dazwischenliegenden (11a) Grundlängsträger und die seitlichen (13), unteren (14) und oberen (15) Rahmenlängsträger mindestens eine innere Längsaussparung (110a, 110b) aufweisen, die an den Enden der Längsträger offen sind, und dass die abgewinkelten (16a) und linearen (16b) Verbindungselemente mindestens einen ersten Teil (160a, 161a) und einen zweiten Teil (160b, 161b) aufweisen, deren Abmessungen und Geometrie so angepasst sind, dass sie in die inneren Längsausnehmungen (110a, 110b) hineinpassen.

6. Vorrichtung nach einem der Ansprüche 1 bis 5, **dadurch gekennzeichnet, dass** die Längsgrundlängsträger (11b), die Stützen (12a, 12b) und die seitlichen Rahmenlängsträger (13) vormontiert sind, so dass sie ein Montagemodul (M1) der Installationsvorrichtung (1) bilden.

7. Vorrichtung nach einem der vorhergehenden Ansprüche, **dadurch gekennzeichnet, dass** die seitlichen (13), unteren (14) und oberen (15) Rahmenlängsträger und die querverlaufenden Grundlängsträger (11c, 11d) eine Auflagefläche (30) und eine offene Längsausnehmung (31) aufweisen, und dass an jedem der unteren (14) und oberen (15) Rahmenlängsträger und an jedem der querverlaufenden Grundlängsträger (11c, 11d) zwei Haltemittel (22) angeordnet sind.

8. Vorrichtung nach einem der vorhergehenden Ansprüche, **dadurch gekennzeichnet, dass** sie eine flexible reflektierende Platte (R) umfasst, die auf den Auflageflächen (30) der quer verlaufenden Grundlängsträger (11c, 11d) angeordnet ist und durch mindestens ein an jedem quer verlaufenden Grundlängsträger (11c, 11d) angeordnetes Haltemittel (22) gehalten wird.

9. Vorrichtung nach Anspruch 8, **dadurch gekennzeichnet, dass** die Breite der reflektierenden Platte (R) größer ist als die Länge der längsgerichteten Grundlängsträger (11b) und dass ihre Länge der Länge der quergerichteten Grundlängsträger (11c, 11d) entspricht, an denen sie gehalten wird, so dass eine konvex gebogene Oberfläche zwischen den quergerichteten Grundlängsträgern (11c, 11d) erzeugt wird.

10. Vorrichtung nach einem der Ansprüche 1 bis 9, wobei die kurzen Stützen (12b) so angeordnet sind, dass die unteren Rahmenlängsträger (14) in einer Höhe von vorzugsweise mehr als etwa 35 cm über den Boden hinausragen.

11. Vorrichtung nach einem der Ansprüche 1 bis 10, wobei die Gesamthöhe der Installationsvorrichtung (1), die der Höhe der oberen Rahmenlängsträger (15) entspricht, vorzugsweise unterhalb von etwa 60 cm liegt.

## Claims

1. Installation device (1) comprising base beams (11a, 11b, 11c, 11d) and frame rails (13, 14, 15), the base beams forming a base and the frame beams forming a support for the installation of bifacial photovoltaic panels (P), said installation device comprising pillars (12a, 12b) combined with at least some of the base beams and at least some of the frame beams, wherein:
- the base beams (11a, 11b, 11c, 11d) comprise longitudinal (11b), transverse (11c, 11d) and intermediate (11a) base beams combined with each other by connecting elements (16a, 16b),
- the frame beams (13, 14, 15) comprise lateral (13), lower (14) and upper (15) frame beams combined together by connecting elements (16a, 16b),
**characterized in that** said pillars (12a, 12b) comprise long (12a) and short (12b) pillars so that the frame beams and the base beams associated with said long and short pillars form an angle (A) of between 5° and 30° and **in that** one or more of the longitudinal (11b), transverse (11c, 11d) and intermediate (11a) base beams and one or more of the lateral (13), lower (14) and upper (15) frame beams are provided with a bearing surface (30) extending over their entire length, said bearing surface (30) being juxtaposed to an open longitudinal recess (31), and **in that** said installation device further comprises a plurality of holding means (22) cooperating with said open longitudinal recess (31), said holding means (22) each comprising a holding tab (42) overhanging the bearing surface (30) by a predetermined distance.

2. Device according to claim 1, **characterized in that** said holding means (20) each comprises a body (40) and at least one support element (41), said holding tab (42) extending in the extension of the body (40) and said at least one support element (41) resting on the outer edge of said open longitudinal recess (31).

3. Device according to one of claims 1 or 2, **characterized in that** said holding means (20) are provided with at least one hole allowing the passage of a fastening means (50) and **in that** said open longitudinal recess (31) comprises two lips (310, 310') allowing to retain an insert (51) in said open longitudinal recess (31), said insert (51) and said fastening means (50) cooperating so as to secure the holding means (22) to said one or more longitudinal (11b), transverse (11a) and intermediate (11a) base beams and said one or more lateral (13), lower (14) and upper (15) frame beams.

4. Device according to one of claims 1 to 3, **characterized in that** either of the bearing surface (30) and the holding tab (42) has a damping layer (43).

5. Device according to one of claims 1 to 4, **characterized in that** said longitudinal (11b), transverse (11c, 11d) and intercalated (11a) base beams and said lateral (13), lower (14) and upper (15) frame beams comprise at least one internal longitudinal recess (110a, 110b) open at the ends of said beams and **in that** said angled (16a) and linear (16b) connecting elements comprise at least a first portion (160a, 161a) and a second portion (160b, 161b) the dimensions and geometry of which are adapted to be inserted into said internal longitudinal recesses (110a, 110b).

6. Device according to any of claims 1 to 5, **characterized in that** the longitudinal base beams (11b), the pillars (12a, 12b) and the lateral frame beams (13) are pre-assembled to form an assembly module (M1) of the installation device (1).

7. Device according to one of the preceding claims, **characterized in that** the lateral (13), lower (14) and upper (15) frame beams and the transverse base beams (11c, 11d) have a bearing surface (30) and an open longitudinal recess (31), and **in that** two holding means (22) are arranged on each of the lower (14) and upper (15) frame beams and on each of the transverse base beams (11c, 11d).

8. Device according to one of the preceding claims, **characterized in that** it comprises a flexible reflecting plate (R) arranged on the bearing surfaces (30) of the transverse base beams (11c, 11d) and held by at least one holding means (22) arranged on each transverse base beam (11c, 11d).

9. Device according to claim 8, **characterized in that** the width of the reflecting plate (R) is greater than the length of the longitudinal base beams (11b) and **in that** its length corresponds to the length of the transverse base beams (11c, 11d) on which it is held, so as to produce a convex curved surface between said transverse base beams (11c, 11d).

10. Device according to one of claims 1 to 9, wherein said short pillars (12b) are arranged so that the lower frame beams (14) overhang the ground at a height preferably greater than about 35 cm.

11. Device according to any of claims 1 to 10, wherein the total height of the installation device (1), corresponding to the height of the upper frame beams (15), preferably remains less than about 60 cm.
